# EUROPEAN PATENT APPLICATION

(11) **EP 2 594 751 A2**
(43) Date of publication of application: **22.05.2013**
(21) Application number: 12192829.5
(22) Date of filing: 15.11.2012
(51) Int. Cl.: F01D 25/24

(54) **Stud Retention**

(30) Priority: 18.11.2011 GB 201119906
(71) Applicant: Rolls-Royce plc, London SW1E 6AT (GB)
(72) Inventor: Scothern, David Peter, Derby, DE3 9AX (GB)
(74) Representative: White, Kevin Andrew

(57) **Abstract**

A gas turbine engine (10) having two components (26, 27) attached together via a stud retention arrangement (28). The stud retention arrangement comprising a stud (29) having a shaft (33) and an integral collar (30) that is located between two engagement sections (31, 32). A recess (35) and a groove (36) are defined in one of the components and an anti-rotation element (37); the collar (30) defines a retention surface (34) and is located within the collar recess (35), the anti-rotation element (37) is located within the groove (36) and engages the retention surface (34) to prevent rotation of the stud (29) during assembly of the components.

## Description

The present invention relates to an anti-rotation stud retention arrangement, for example, in a gas turbine engine.

A stud is a fastener which is fitted into an assembly by means of a screw thread, and which when installed provides a protruding male thread to allow a component to be attached and secured with a nut. In order to ensure that the stud does not rotate when the nut is being tightened, an anti-rotation feature is desirable. Typically, locking keys or pins are driven down axial slots in the stud and bite into the parent material.

However, if the stud requires replacement due to damage, machining is required to remove the stud and to prepare the assembly to receive an oversized replacement.

Therefore, there is provided a gas turbine engine having two components attached together via a stud retention arrangement; the stud retention arrangement comprising a stud having a shaft and an integral collar that is located between two engagement sections and a recess and a groove defined in one of the components and an anti-rotation element; the collar defines a retention surface and is located within the collar recess, the anti-rotation element is located within the groove and engages the retention surface to prevent rotation of the stud during assembly of the components.

The two components may be attached together via an annular array of stud retention arrangements.

One component may extend to cover the collar recess thereby preventing the anti-rotation element from release.

The retention surface of the anti-rotation element may be flat, convex or concave.

The anti-rotation element may be annular, part-annular or discrete to each stud retention arrangement.

The anti-rotation element may be integral with a washer that is located between the two components.

The anti-rotation element may be annular or part-annular and comprise an array of integral washers.

The collar may have multiple retention faces and the anti-rotation element has two or more cooperating surfaces.

In another aspect of the present invention there is provided a gas turbine engine having a rotational axis and two components arranged about the rotational axis; the two components are attached together via a stud retention arrangement; each stud retention arrangement comprises a stud having two engagement sections, a shaft and an integral collar that is located between the two engagement sections and an annular anti-rotation element; the two engagement sections each engage one of the components, the integral collar defines a retention surface, the annular anti-rotation element has an annular array of apertures that are arranged to engage each retention surface to prevent rotation of the studs during assembly of the components, the annular anti-rotation element is located between the two components to axially space the components a predetermined axial distance apart.

The retention surface of the anti-rotation element may be flat, convex or concave.

The collar has multiple retention faces and the anti-rotation element has two or more cooperating bearing surfaces.

The components may be a drum and a static race. A stud retention arrangement will be more fully described by way of example with reference to the accompanying drawings in which:
Figure 1 is a schematic section of part of a ducted fan gas turbine engine incorporating the present invention;
Figure 2 is an enlarged view of part of the gas turbine engine of Figure 1 and shows a location bearing and surrounding architecture incorporating a stud retention arrangement in accordance with the present invention;
Figure 3 is a further enlarged view of the stud retention arrangement shown in Figure 2;
Figure 4 is a front view on arrow A in Figure 5 of a stud retention arrangement in accordance with the present invention;
Figure 5 is a cross-section through a stud retention arrangement in accordance with the present invention;
Figure 6 is a cross-section through another stud retention arrangement in accordance with the present invention;
Figure 7 is a cross-section B-B through another stud retention arrangement in accordance with the present invention,
Figure 8 is a cross-section through another stud retention arrangement in accordance with the present invention and
Figure 9 is a view cross-section C-C the stud retention arrangement of Figure 8.

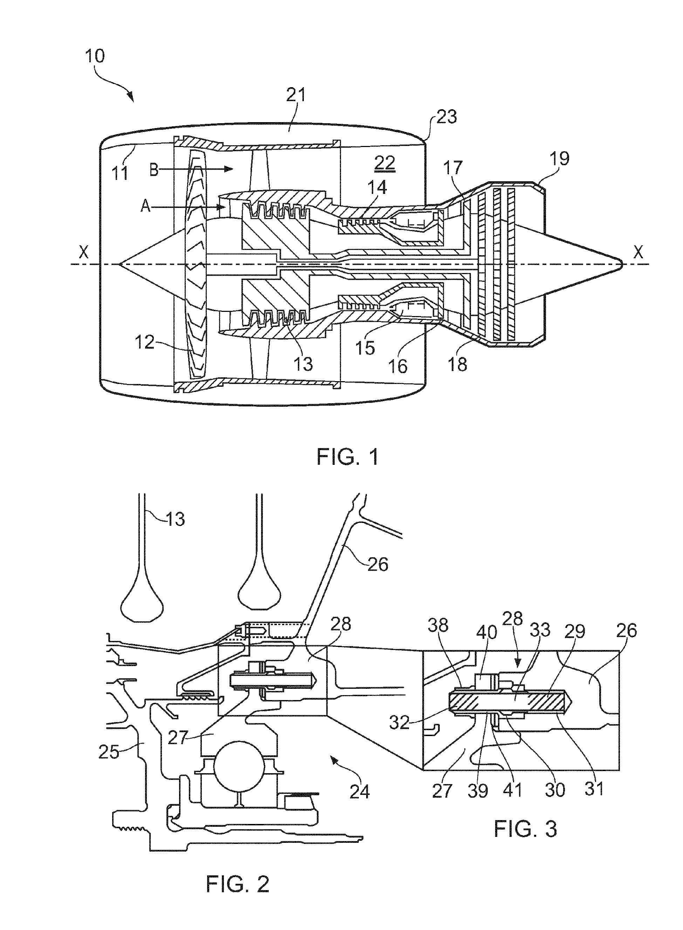

With reference to Figure 1, a typical ducted fan gas turbine engine generally indicated at 10 has a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 14 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

In Figures 2 to 5, a bearing arrangement 24 is located between an intermediate pressure compressor shaft 25 and an intercase 26. A static race 27 of the bearing arrangement 24 is connected to the intercase 26 via a retention stud arrangement 28.

The retention stud arrangement 28 comprises an elongate stud 29 having a shaft 33, an integral collar 30 that is located between two threaded sections 31, 32. The stud 29 engages with the intercase 26 and static race 27. The collar 30 comprises a retention surface 34 which in this case is flat. The retention stud arrangement 28 comprises a collar recess 35 into which the collar 30 can be located.

To install and assemble retention stud arrangement 28 the stud 29 is screwed into the intercase 26 until the collar 30 is located within the collar recess 35. The stud 29 is further rotated until the retention surface 34 is aligned with a groove 36 in the intercase. When all studs have been installed and aligned, an anti-rotation element or keeper ring 37 is inserted into the groove 36. The keeper ring 37 fills the groove such that it prevents rotation of the stud by virtue of abutting the retention face 34 of the collar 30. The intercase 26, typically having an annular array of retention stud arrangements, is mated to the static race 27. The intercase 26 defines receiving apertures 39 for the studs 29. A nut 38 is then screwed onto the stud 29 to secure the two components 26, 27 together.

Advantageously, when the nut 38 is tightened or undone, the flat face of the retention face 34 acts as a torque reaction feature. The location of the retention or keeper ring 37 means that it is captured between the two components 26, 27. The static race 27 comprises a flange 40 that extends to cover the collar recess 35, thereby preventing the keeper ring 37 from release. The flange 40 is annular however; the flange 40 may be castellated, each castellation covering a recess.

A washer 41 may be provided between the flange and the static race 27. In the exemplary embodiment described herein, the washer 41 can be used to set an axial position of the intermediate pressure rotating parts relative to the static parts. The washer 41 can also prevent scoring of the surface of the intercase 26.

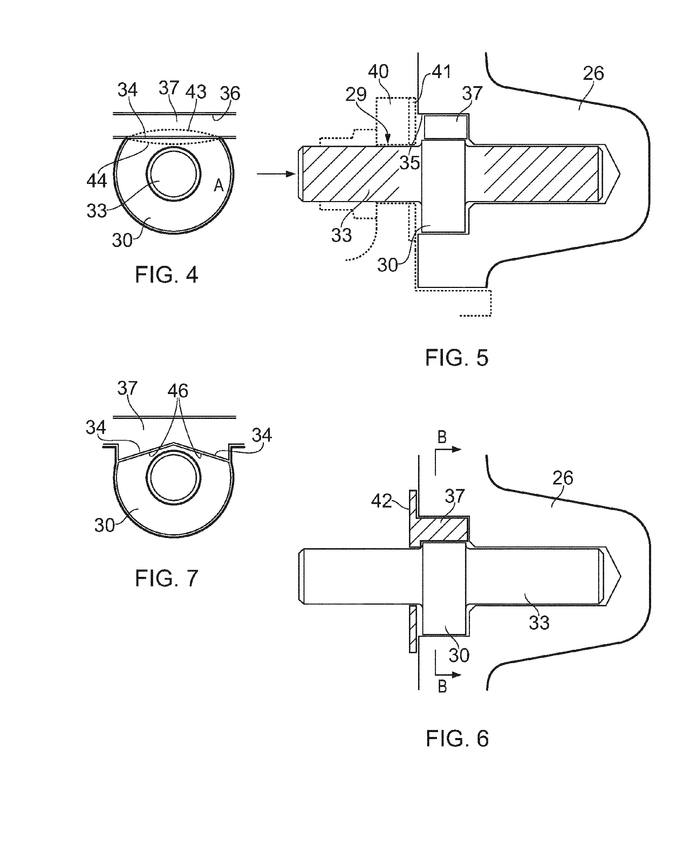

Figure 6 shows a washer 42 with an integral anti-rotation element 37 provided. This configuration reduces parts count and advantageously firmly holds the washer 42 in place during assembly of the nut 38. In this case the anti-rotation element 37 is discrete i.e. it is not annular. However, it is also possible that an annular or part-annular anti-rotation element 37 may comprise an array of washers 41. The washers 41 may be integral to the annular or part-annular anti-rotation element 37.

This retention stud arrangement 28 allows for the replacement of damaged studs without any requirement for machining work or the installation of subsequent oversize repair studs. This is achieved by means of a removable retention feature, one being required for each complete set of studs.

The primary advantage of this design is the ease of repair. Worn or damaged studs can be replaced easily by removing the keeper ring, unscrewing the damaged stud, replacing it with a new item and re-installing the keeper ring. By contrast, known attachment arrangements require the assembly to be sent to a suitable facility for machining. This will significantly reduce repair cost and disruption particularly when associated with a gas turbine engine.

The anti-rotation element 37 need not be a ring, annular or part annular, and can be of arbitrary shape, depending on the arrangement of studs that it is being used to retain. In the simplest case, the anti-rotation element 37 is a short strip and is adequate to lock the rotation of an individual stud. This short strip can be either straight or part curved as part of a circumference. The anti-rotation element 37 may itself be manufactured with features allowing it to be fixed, via a bolt hole for example, to the parent assembly.

In Figure 7, multiple retention faces 34 may be provided on the collar 30. In this case, the anti-rotation element 37 is designed to interface with the retention faces on the collar 30 with two or more corresponding surfaces 46.

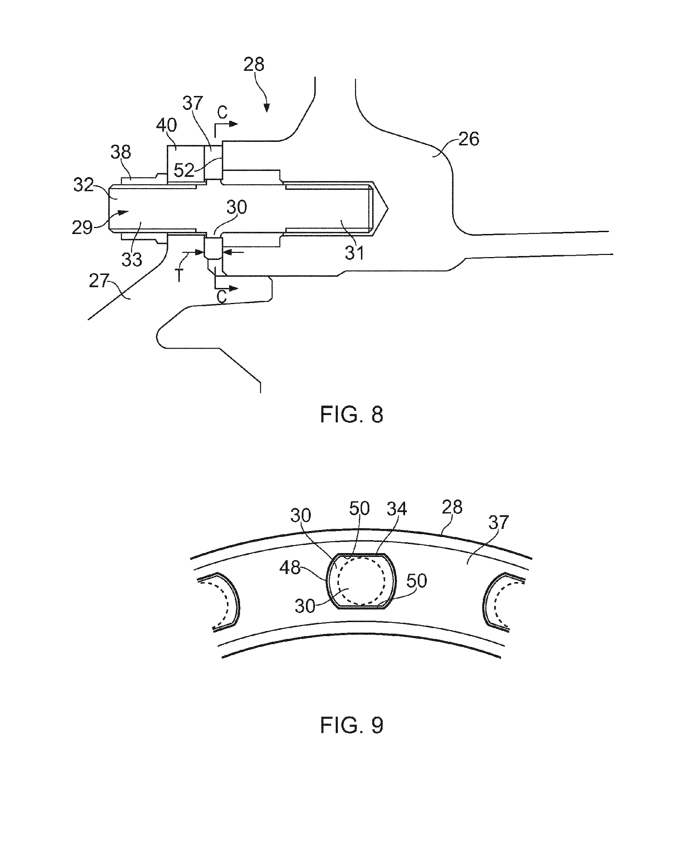

Referring to Figures 8 and 9 where the same features carry the same reference numerals as previous; the two components are arranged about the rotational axis XX of the engine and again for example are a drum 26 and a static race 27. Typically, both components can be annular. The two components are attached together via an annular array of stud retention arrangements 28. Each stud retention arrangements 28 has a stud 29 has its two engagement sections 31, 32, the shaft 33 and an integral collar 30 that is located between the two engagement sections 31, 32 which each engage one of the components 26, 27 respectively. A nut 38 secures the two components together. The annular anti-rotation element 37 has an annular array of apertures 48 having bearing surfaces 50 that are arranged to engage the retention surfaces 34 of the studs to prevent rotation of the studs 29 during assembly of the components and stud retention arrangements 28. The annular anti-rotation element 37 is located and trapped between the two components to axially space the components a predetermined axial distance apart.

The anti-rotation element 37 is of a desired thickness T chosen to give a predetermined axial relative position of the components. In this example, the ability to choose a particular thickness of anti-rotation element 37 is advantageous because the correct design load of the bearing can be achieved. An incorrect axial spacing might mean that the bearing is over or under loaded causing premature wear and possible failure.

The bearing surfaces 50 of the apertures 48 that are arranged to engage the retention surfaces 34 of the studs are advantageously diametrically opposed bearing / retention surfaces, although other arrangements are possible. One advantage of the diametrically opposed bearing / retention surfaces is that torque loads experienced by the stud are contained or resolved within the retention ring, rather than inducing stresses and bending in the stud.

This stud retention arrangement 28 also has the advantage that the retention ring is clamped in position and is therefore not susceptible to fretting due to vibration.

The stud retention arrangement 28 is assembled by fitting one engagement section 31 of the stud 29 to the component 26 via screwing or other fitment; other studs in the annular array may also be fitted. An anti-rotation element 37 is selected of the desired thickness to give the correct axial spacing of the two components. The anti-rotation element 37 is assembled to engage the collar 30 of the stud and so that the bearing surface(s) 50 engage the retention surface(s) 34. The two components are brought together so that the second engagement section 32 passes through the flange 40. The nut 38 is then tightened onto the second engagement section 32 so that the two components are drawn together into their designed axial stacking positions. The anti-rotation element 37 is trapped between abutting flange 40 and surface 52 of the component 26.

In this and the other embodiments, the anti-rotation element 37 prevents rotation of the stud relative to the first component 26 and therefore prevents the stud from moving axially relative to the first component 26.

Referring back to Figure 4 and applicable to all the embodiments described herein, the cooperating surfaces of the anti-rotation element 37 and the collar 30 need not be flat. For example, the surface of the anti-rotation element 37 may be convex 44 or concave 43 and the surface of the collar vice-versa.

It should be appreciated that the screw thread engagement between the two threaded sections 31, 32 and the components 26, 27 may be replaced by other engagement means such as a bayonet arrangement.

It should be appreciated that the intercase 26 and static race 27 are two examples of components of a gas turbine engine that may be joined together. The intercase 26 may be any form of drum, casing or other static component. The static race 27 is the outer race of the bearing; however, components other than that of a bearing could be interposed.

## Claims

1. A gas turbine engine (10) having two components (26, 27) attached together via a stud retention arrangement (28);
the stud retention arrangement comprising
a stud (29) having two engagement sections (31, 32), a shaft (33) and an integral collar (30) that is located between the two engagement sections (31, 32) and
a recess (35) and a groove (36) are defined in one of the components and
an anti-rotation element (37);
the integral collar (30) defines a retention surface (34) and is located within the recess (35), the anti-rotation element (37) is located within the groove (36) and engages the retention surface (34) to prevent rotation of the stud (29) during assembly of the components.

2. A gas turbine engine (10) as claimed in claim 1, the two components (26, 27) are attached together via an annular array of stud retention arrangements (28).

3. A gas turbine engine (10) as claimed in any one of claims 1-2, wherein one component (26, 27) has a flange (40) that extends to cover the recess (35) thereby preventing the anti-rotation element (37) from release.

4. A gas turbine engine (10) as claimed in any one of claims 1-3, wherein the retention surface of the anti-rotation element (37) is flat (34), convex (44) or concave (43).

5. A gas turbine engine (10) as claimed in any one of claims 1-4, wherein the anti-rotation element (37) is annular, part-annular or discrete to each stud retention arrangement (28).

6. A gas turbine engine (10) as claimed in any one of claims 1-4, wherein the anti-rotation element (37) is integral with a washer (42) that is located between the two components.

7. A gas turbine engine (10) as claimed in any one of claims 1-4, wherein the anti-rotation element (37) is annular or part-annular and comprises an array of integral washers (41).

8. A gas turbine engine (10) as claimed in any one of claims 1-7, wherein the collar (30) has multiple retention faces (34) and the anti-rotation element (37) has two or more cooperating surfaces (46).

9. A gas turbine engine (10) as claimed in any one of claims 1-8, wherein the components are a drum (26) and a static race (27).

10. A gas turbine engine (10) having a rotational axis and two components (26, 27) arranged about the rotational axis; the two components are attached together via a stud retention arrangement (28);
each stud retention arrangement comprises
a stud (29) having two engagement sections (31, 32), a shaft (33) and an integral collar (30) that is located between the two engagement sections (31, 32) and
an annular anti-rotation element (37);
the two engagement sections (31, 32) each engage one of the components,
the integral collar (30) defines a retention surface (34),
the annular anti-rotation element (37) has an annular array of apertures (48) that are arranged to engage each retention surface (34) to prevent rotation of the studs (29) during assembly of the components,
the annular anti-rotation element (37) is located between the two components to axially space the components a predetermined axial distance apart.

11. A gas turbine engine (10) as claimed in claim 10, wherein the retention surface of the anti-rotation element (37) is flat (34), convex (44) or concave (43).

12. A gas turbine engine (10) as claimed in any one of claims 10-11, wherein the collar (30) has multiple retention faces (34) and the anti-rotation element (37) has two or more cooperating bearing surfaces (46, 48).

13. A gas turbine engine (10) as claimed in any one of claims 10-12, wherein the components are a drum (26) and a static race (27).
